# EUROPEAN PATENT APPLICATION

(11) **EP 1 142 541 A2**
(43) Date of publication of application: **10.10.2001**
(21) Application number: 01303093.7
(22) Date of filing: 30.03.2001
(51) Int. Cl.: A61C 13/00, G01B 5/00, B23Q 3/10

(54) **Mount for a part to be measured and manufacturing method therefor**

(30) Priority: 07.04.2000 GB 0008631
(71) Applicant: RENISHAW plc, Wotton-Under-Edge Gloucestershire GL12 8JR (GB)
(72) Inventor: Wells, Peter John, Minchinhampton, Gloucestershire GL6 9EQ (GB); McMurtry, David Roberts, Gloucestershire GL12 7EF (GB)
(74) Representative: Jackson, John Timothy

(57) **Abstract**

A mount 10 for a part to be measured (e.g. a tooth 20 which is to have its surface measured) has three locators 14 which allow repeatable positioning of the mount on a holder 12. The mount 10 and its locators are manufactured in a low cost way e.g. by means of chemical etching, stamping, piercing, folding, embossing or moulding. The mount may be sheet material or a moulded plastics, and a support 22 for the part may be provided. The material of the mount may be magnetisable or have magnetic properties for its attraction and position securement to the holder 12. A mount transit system is described (Figs 10 and 11) for placing and removing a mount on the holder.

## Description

This invention relates to a mount for parts to be measured dimensionally particularly but not exclusively a mount for small parts, especially teeth, impressions of teeth and other dental parts. The invention relates also to a transit system for the mount.

Teeth, impressions etc can be measured for example by moving a scanning probe across their surface. A digital profile can be produced. This profile can be used to make a replacement tooth or tooth-part, for example it can be used to machine a ceramic filling.

The part to be measured has to be held accurately and might need to be removed from a measuring machine and replaced. The mount will need to be moved from place to place around a measuring machine e.g. to automate the measurement of many parts. So, repeatable positioning of the mount when it is replaced on its holder, following removal, is desirable.

Where low cost or disposable items like dental impressions are to be scanned or worked upon, it is often convenient and hygienic to dispose of the item together with its mount (particularly where the two are permanently affixed as by adhesive). So a low cost disposable mount is desirable also. More desirably such a mount would have the attributes mentioned in the preceding paragraph.

According to a first aspect of the invention there is provided a mount for a part to be measured in a measuring machine, the mount comprising a plurality of locators for locating kinematically the mount to a holder, the mount at the locators being formed by means of one or more of etching, stamping, piercing, folding, embossing and moulding.

According to a second aspect of the present invention there is provided a mount for a part to be measured in a measuring machine, the mount comprising a plurality of locators for locating kinematically the mount to a holder, the mount at the locators being formed from sheet or substantially planar material and the locators being in the form of material missing from the material of the mount and/or mount material which is deformed.

According to a third aspect of the present invention, there is provided a mount for a part to be measured in a measuring machine, comprising a base, the base having a plurality of locators for locating kinematically the mount to a holder, and a support portion upstanding from the base, the support portion being adapted to support the part to be measured.

Preferably the locators of the first and third aspect are formed as three slots of missing material in the mount/base.

Preferably the mount according to the first, second and third aspects is formed from magnetisable material.

According to a fourth aspect of the invention there is provided a method of manufacturing a kinematic mount, the method comprising the steps of:
providing a magnetic or magnetisable mount material;
forming a kinematic location in the material by etching, stamping, piercing, folding, embossing or moulding, or by a combination thereof.

Preferably the method further includes the step of forming a support at the mount, for supporting a part which is to be mounted, the support being formed by means of one of the techniques mentioned in the preceding paragraph.

The invention provides also a mount transit system for moving mounts (e.g. of the type mentioned above), the system comprising a mount rest station and a movable mount holder, the rest station including at least one mount rest area, the or each area having a mount accepting part and protrusion for supporting a mount from below, the movable mount holder being adapted for movement in at least two paths, a first path approaching the station laterally then moving downwardly relative to the station, and a second path approaching the station in a relative upward direction and then moving away from the station, wherein in use movement of the mount along the first of the paths causes a mount held on the holder to be removed by abutment of the mount with the protrusion and thereby accepted into the mount accepting part.

Preferably the or each mount accepting part comprises an open-ended first slot in a plate and the protrusion is formed by a ledge in the slot.
Preferably the rest area comprises a device for allowing only one possible orientation of the mount at the rest area.

Various illustrative embodiments of the invention will now be described in detail. Reference will be made to the drawings, wherein:
Figs 1a and 1b show a mount and a holder for the mount and also a section through the mount and holder about centre line A; all according to one embodiment of the invention;
Fig 2 shows the mount, the holder and in this case the mount holding a tooth;
Fig 3 shows an alternative form of mount holding a tooth in a different orientation;
Figs 4-9 show variants of the mount; and
Figs 10 and 11 show a mount, its holder, and a mount rest station, together forming a mount transit system.

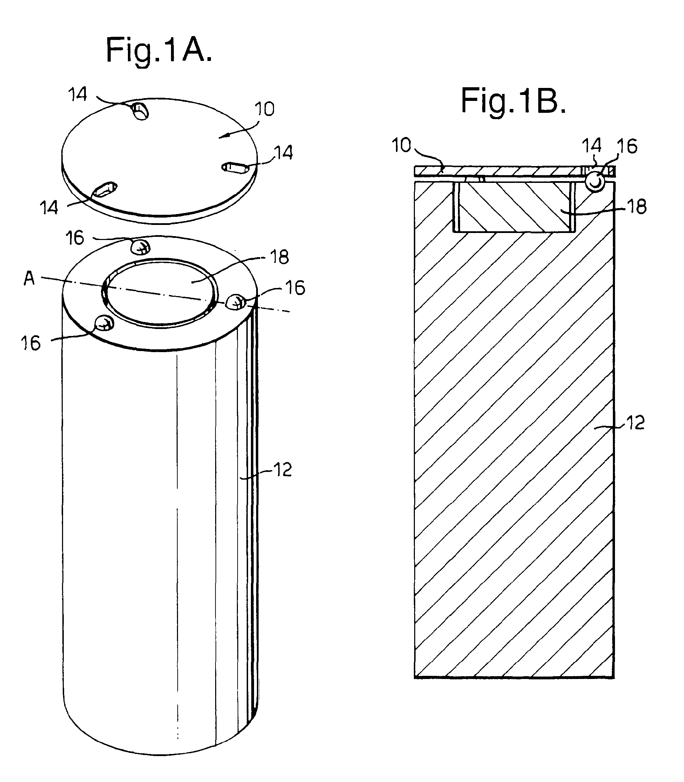

In Figs 1a and 1b there is shown a sheet metal or other planar material mount 10 to which in use a small part for example a tooth may be mounted. The small part may then be dimensionally measured and a profile of its surface can be determined. The mount 10 is held to a holder 12. A magnet 18 is, in this case, used to attract the mount 10 to the holder 12. Magnet 18 may resiliently deflect: the mount 10, particularly if the mount 10 is manufactured from thin sheet metal. Such deflection would add to the magnetic attraction of the mount to the holder 12 and thereby give a more positive holding force between the two. The mount 10 is located positively and accurately on its holder 12 by means of three location slots 14 which co-operate with three spherical parts 16 fixed to holder 12. The slots 14 are formed by generally masking the mount and chemically etching unmasked areas of the slots. In use, each spherical part 16 will touch either side of one of the slots 14 thereby giving six points of location for the mount 10. The slots 14 can, with equal merit, be produced by stamping. Such location is referred to as a kinematic location. It is of course possible that other kinematic arrangements could be used, e.g. the three spheres 16 can engage with a triangular hole, a slot and a flat surface respectively.

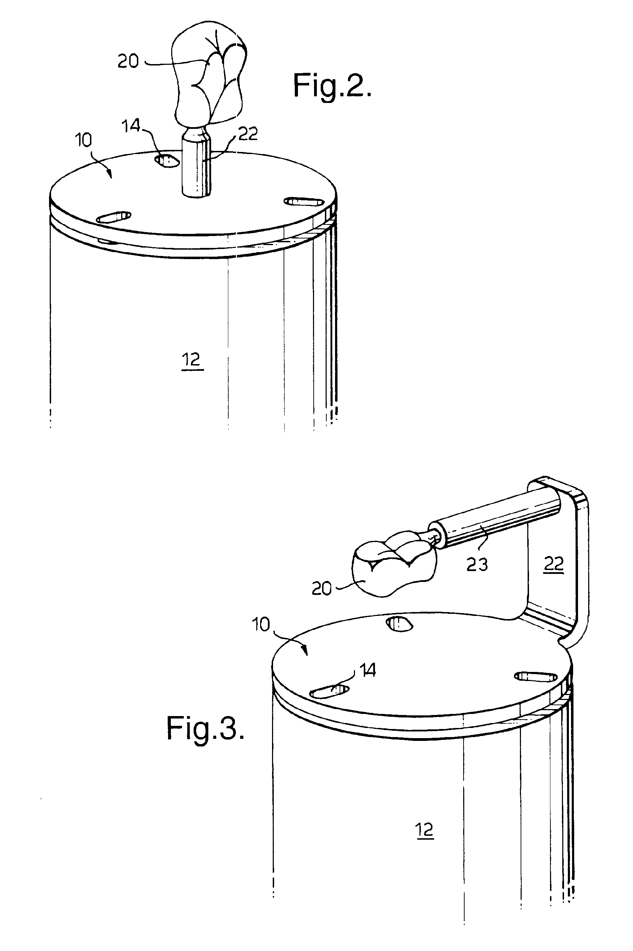

Figs 2 and 3 show how a tooth or other small part can be held on mount 10. In the case of Fig 2, tooth 20 is held on mount 10 by means of a support portion in the form of a post 22. Likewise in Fig 3, a support post 22 is shown holding tooth 20.

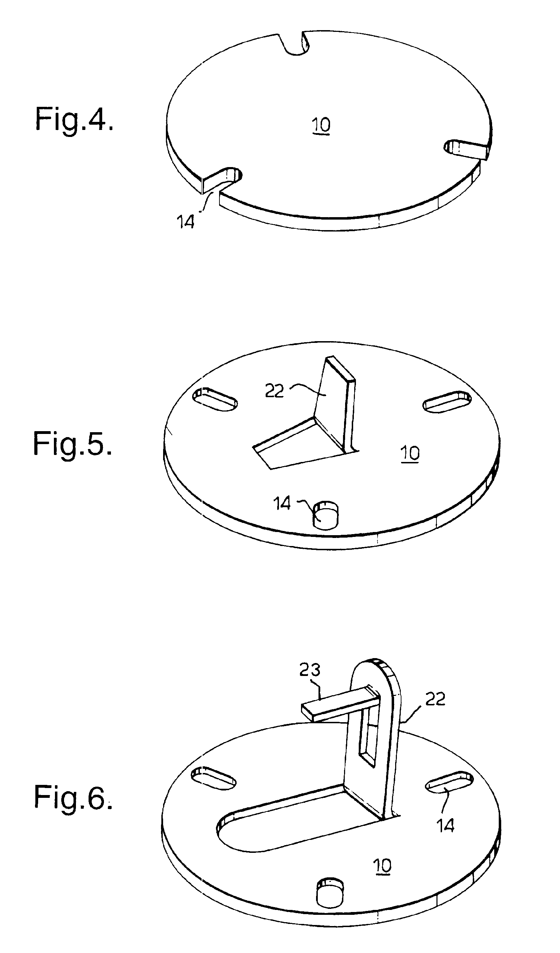

Fig 4 shows open-ended slots 14. This is an alternative method of producing the mount slots.

Fig 5 shows a support post 22 in the form of a pierced tab folded up from the material of the mount 10.

Similarly Fig 6 shows a two-part support post pierced and folded from the material of the mount 10. In this case a two-part piercing and folding is shown.

It will be noted that Figs 3 and 6 show an additional lateral support 23, which may enable a probe to reach areas of a supported part which are not possible to reach when the part is supported as illustrated in Fig 2.

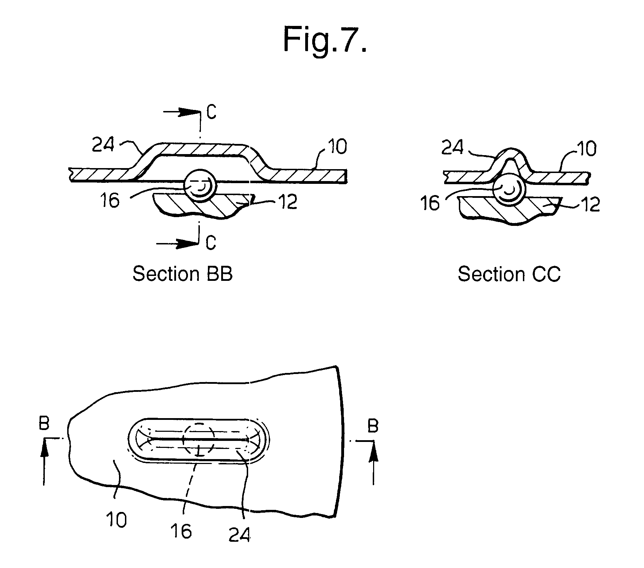

Fig 7 shows an alternative form of locator. In this case an elongate dimple 24 is embossed into the surface of mount 10.

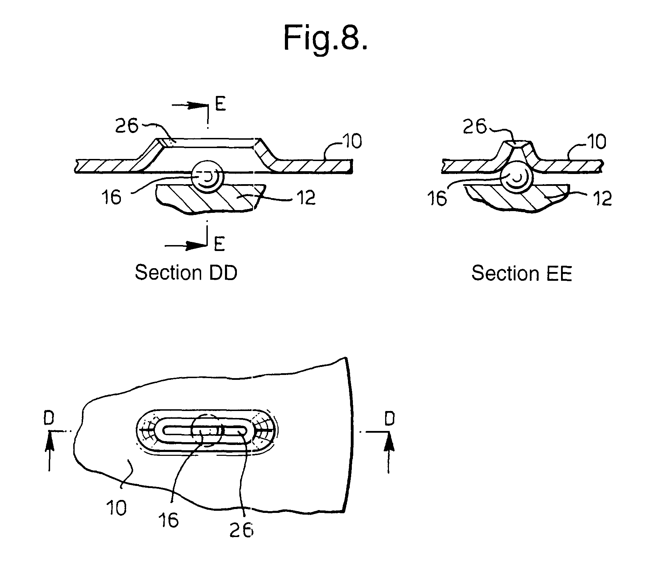

Similarly Fig 8 shows a flanged slot 26 stamped into the surface of the mount 10. Again this provides a two-point location for ball 16.

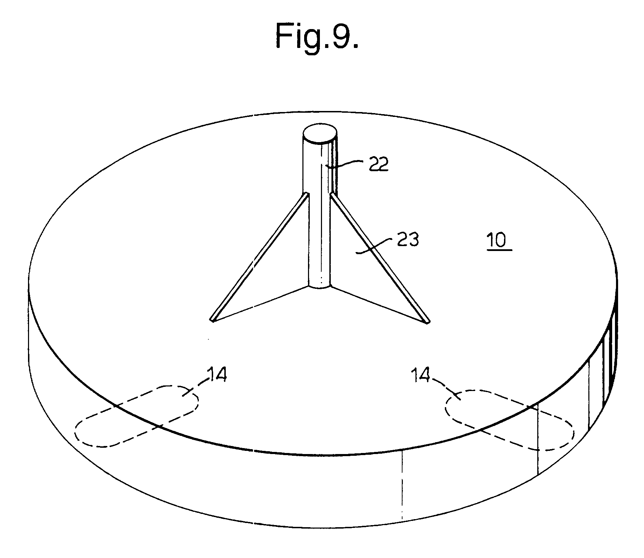

Fig 9 shows a plastics mount 10. In this case a ferrite loaded plastics material has been moulded into the shape of the mount 10 having a tooth support 22 with strengthening webs 23 and three location recesses 14 (two of which only are illustrated), and which are positioned on the underside of the mount shown. These recesses can have edges which provide a total of six location points for balls 16 or may be vee grooves again providing six faces at which six contact points are made.

The use of ferrite within the plastics enables the mount to be magnetically attractable to the holder 12, as well as making the plastics harder. Consequently the contact points at the recess will be hard and therefore repeatable positioning of the mount on the holder is possible.

The mounts illustrated in Figs 2-9 and described above have the advantage of being inexpensive to produce whilst providing kinematic positioning repeatability.

Various other ways of producing a support on the mount for the part to be measured will be obvious to a skilled addressee, as would the various ways of producing locators in or on the surface of the mount 10. The manufacturing techniques described herein could be used solely or in combination to produce the mount and/or the support.

Kinematic locations have been described and illustrated which in use provide highly repeatable positioning of the mount to the holder. The kinematic elements at the mount and base provide generally six points of contact. Often these take the form of three pairs of contact points (as described and illustrated) but other arrangements are possible within the ambit of the term "a kinematic location". The kinematic location should restrain the six possible degrees of freedom of the mount relative to the holder.

Such a location or support is sometimes known as a Boys support, and is described in, for example, H.J.J. Braddick, "Mechanical Design of Laboratory Apparatus", Chapman & Hall, London, 1960, pages 11-30. Braddick also describes a functionally equivalent kinematic support, sometimes known as a Kelvin support, in which the six points of contact or constraints are provided three at a first area, two as a second spaced area, and one at a third spaced area. The terms "kinematic", "kinematically constrained" and like terms, as used in this specification, encompass Boys supports, Kelvin supports and other kinematic and semi- or quasi-kinematic types of supports. An example of a quasi-kinematic location or support is a cone and ball, together with a vee and ball, and a flat and ball. Thus the vee and flat co-operate with their respective balls to provide 2+1 contact points and the cone and ball nominally provide a further 3 contact points.

In this specification the term magnetic or magnetisable material is intended to embrace permanently magnetised materials as well as those materials which can be temporarily magnetised (e.g. soft iron or steel) and those which exhibit the properties of magnetism, permanently or temporarily. So if the mount were magnetised, the magnet 18 could be replaced by a soft iron insert or the like.

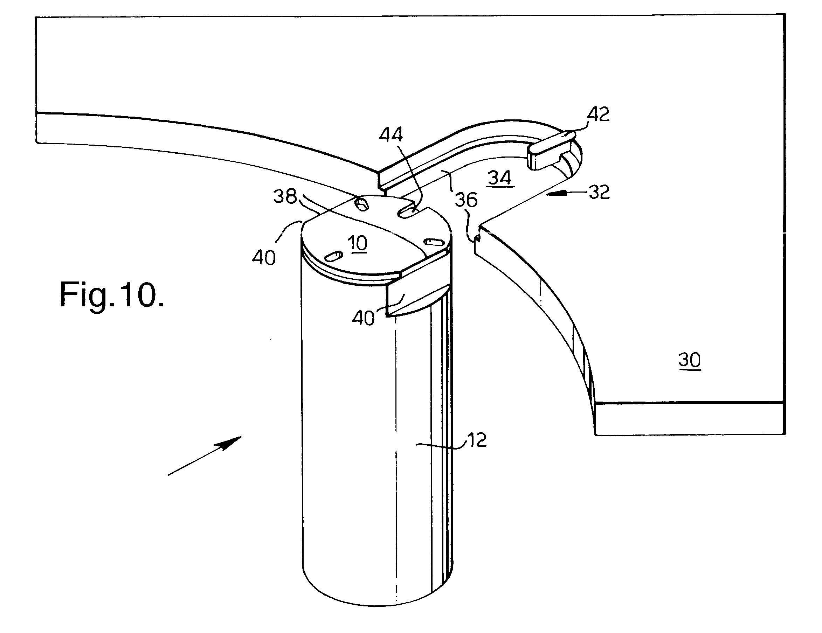

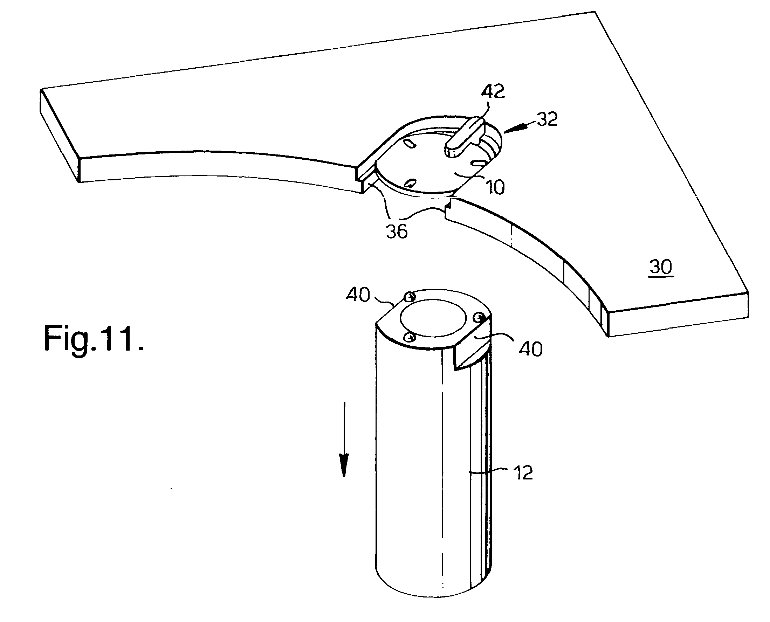

Figs 10 and 11 show a rest station 30 for holding one or more mounts 10. There is shown a rest area 32 for a mount which has a mount-accepting slot 34. A protrusion in the form of ledge 36 in the slot holds the mount 10 in place. In use holder 12 is movable from a part scanning location to the rest station 30 and back e.g. it may be mounted to a movable table or arm. Fig 10 shows holder 12 with mount 10 approaching the rest station 30 in the direction of the arrow. Holder 12 will enter slot 34 in a lateral direction and as shown in Fig 11 may move away from the station vertically downwardly. This downward movement causes the under-face of mount 10 to abut ledge 36 and mount 10 will be pulled off holder 12 as the holder moves downwardly. This action causes unloading of the mount 10 from holder 12. Loading of holder 12 with a mount 10 may be carried out in an opposite manner to loading i.e. the holder may approach the station from below, move upwardly and accept a mount by magnetic attraction, then move away from the station 30 laterally.

It can be seen that: holder 12 and mount 10 are slightly modified in this embodiment. Holder 12 has flats 40 for entering slot 34 and clearing ledge 36. Mount 10 has similar flats 38 which allow it to enter the slot 34 but which overhang the flats 40 so that they can rest on the ledge 36. In this embodiment a device for allowing only one possible orientation of the mount in the slot 34 is illustrated. This device may take many forms but in this illustration a peg 42 co-operates with a hole 44 so complete acceptance of the mount 10 in the slot 34 will not be made if the mount is correctly orientated.

Although only one mount rest area 32 is shown, a plurality of areas may be provided at the station 30. Such a plurality might then allow automatic scanning of a series of parts each on a different mount and each being automatically loaded/unloaded onto/from the holder 12 for measuring. The mount holder and area(s) thus form a mount transit system.

Whilst the description and drawings refer to use with teeth etc, this application is purely illustrative and it is not intended to limit the invention to such applications.

## Claims

1. A mount (10) for a part (20) to be measured in a measuring machine, the mount comprising a plurality of locators (14) for locating kinematically the mount to a holder (12), **characterised in that** the mount at the locators is formed by means of etching, stamping, piercing, folding, embossing, moulding, or a combination thereof.

2. A mount (10) for a part (20) to be measured in a measuring machine, the mount comprising a plurality of locators (14) for locating kinematically the mount to a holder (12), **characterised in that** the mount at the locators is formed from sheet or substantially planar material and the locators are in the form of material missing from the material of the mount and/or mount material which is deformed.

3. A mount (10) for a part (20) to be measured in a measuring machine, comprising a base, the base having a plurality of locators (14) for locating kinematically the mount to a holder (12), **characterised by** a support portion (22),(22/23) upstanding from the base, the support portion being adapted to support the part to be measured.

4. A mount as claimed in claim 1 or claim 3 wherein the locators are formed as three slots of missing material in the mount or base or a deformed material.

5. A mount as claimed in any one of the preceding claims wherein the material from which the mount is formed is magnetic.

6. A method of manufacturing a kinematic mount, the method comprising the steps of:
providing a magnetic or magnetisable, mount material;
**characterised by** the step of forming a kinematic location in the material by etching, stamping, piercing, folding, embossing or moulding or by a combination thereof, **characterised in that** the said technique is used to form a kinematic location.

7. A method as claimed in claim 6 including the further step of forming a support (22) or (22/23) at the mount by means of etching, stamping, piercing, folding, embossing or moulding or by a combination thereof.

8. A mount transit system for moving mounts (10), **characterised in that** the system comprises a mount rest station (30) and a movable mount holder (12), the rest station including at least one mount rest area (32), the or each area having a mount accepting part (34) and protrusion (36) for supporting a mount from below, the movable mount holder being adapted for movement in at least two paths, a first path approaching the station laterally then moving downwardly relative to the station, and a second path approaching the station in a relative upward direction and then moving away from the station, wherein in use movement of the mount along the first of the paths causes a mount held on the holder to be removed by abutment of the mount with the protrusion and thereby accepted into the mount accepting part.

9. A mount transit system as claimed in claim 8 wherein the or each mount accepting part comprises an open-ended first slot in a plate and the protrusion is formed by a ledge in the slot.

10. A mount transit system as claimed in claim 8 or 9 wherein the rest area comprises a device (42) for allowing only one possible orientation of the mount at the rest area.
